(19) Europäisches Patentamt
European Patent Office
Office européen des brevets

(11) Numéro de publication: **0 093 640**
**B1**

# (12) FASCICULE DE BREVET EUROPEEN

(45) Date de publication du fascicule du brevet: **16.07.86**

(51) Int. Cl.⁴: **C 01 B 33/04**, C 01 B 33/107

(21) Numéro de dépôt: **83400787.4**

(22) Date de dépôt: **21.04.83**

(54) **Procédé de fabrication de silane à partir de trichlorosilane.**

(30) Priorité: **03.05.82 FR 8207620**

(43) Date de publication de la demande:
**09.11.83 Bulletin 83/45**

(45) Mention de la délivrance du brevet:
**16.07.86 Bulletin 86/29**

(84) Etats contractants désignés:
**DE FR GB IT**

(56) Documents cités:
**EP - A - 0 063 067**
**FR - A - 2 118 725**
**FR - A - 2 261 977**
**FR - A - 2 290 447**
**FR - A - 2 290 448**

**CHEMICAL ABSTRACTS, vol. 95, no. 4, 27 juillet 1981, page 119, colonne de gauche, résumé no. 27241c, Columbus, Ohio, USA**

(73) Titulaire: **RHONE-POULENC SPECIALITES CHIMIQUES, "Les Miroirs" 18, Avenue d'Alsace, F-92400 Courbevoie (FR)**

(72) Inventeur: **Lepage, Jean-Luc, 81, Chemin de Chavril, F-69110 Sainte-Foy Les-Lyon (FR)**
Inventeur: **Simon, Gérard, 106, boulevard du 11 novembre, F-69100 Villeurbanne (FR)**

(74) Mandataire: **Savina, Jacques et al, RHONE-POULENC INTERSERVICES Service Brevets Chimie 25, quai Paul Doumer, F-92408 Courbevoie Cédex (FR)**

**EP 0 093 640 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

1. La présente invention concerne un procédé de fabrication de silane à partir d'halogénosilanes.

Elle a trait plus particulièrement à un procédé de fabrication de silane à partir de trichlorosilane.

Le silane constitue une matière première de choix pour obtenir, par décomposition, du silicium utilisable notamment dans les dispositifs à semi-conducteurs ou photovoltaïques (cellules solaires).

On sait qu'il est possible d'obtenir du silane par dismutation de trichlorosilane en présence de divers catalyseurs selon les réactions équilibrées suivantes:

(1) $2HSiCl_3 \rightleftarrows H_2SiCl_2+SiCl_4$
(2) $2H_2SiCl_2 \rightleftarrows HSiCl_3+H_3SiCl$
(3) $2H_3SiCl \rightleftarrows SiH_4+H_2SiCl_2$ soit globalement
(4) $2HSiCl_3 \rightleftarrows SiH_4+3SiCl_4$

Ainsi, selon le brevet français n° 2261977, il a été proposé de produire du silane par réaction de dismutation ou de redistribution de $HSiCl_3$ dans un lit de résine solide d'échange d'anions à une température suffisante pour provoquer la vaporisation, hors de la zone de réaction, des produits à plus faible point d'ébullition de la réaction et pour provoquer la condensation du produit liquide à point supérieur d'ébullition résultant de la réaction, $SiCl_4$, et son écoulement loin de la zone de réaction. On maintient la température au sommet du lit à une valeur supérieure au point d'ébullition de $SiH_4$ et inférieure au point d'ébullition de $H_3SiCl$ et l'on récupère du lit $SiH_4$ comportant de petites quantités d'hydrogènes chlorosilane qui nécessitent une séparation ultérieure.

Ce procédé extrêmement complexe et délicat à mettre en œuvre opère soit une distillation continue des produits des différentes réactions équilibrées (1) (2) et (3) et permet une certaine séparation des divers produits en présence soit une purification de $SiH_4$ sur piège à charbon.

Par ailleurs, on connaît différents procédés de fabrication de dichlorosilane par dismutation du trichlorosilane en présence de catalyseurs divers. Lors de cette dismutation selon la réaction (1) les rendements en dichlorosilane obtenus sont toujours bien supérieurs aux rendements dans les autres chlorosilanes. Parmi les catalyseurs connus dans ce but, on a proposé notamment: les amines tertiaires de formule générale NR'R"R"' dans laquelle R', R", R"' sont des radicaux alcoyles identiques ou différents (brevet français n° 1111925), les chlorhydrates d'amines (brevet français n° 2096605), les pyrrolidones N-substituées (brevet français n° 2290477), et les tétraalcoylurées (brevet français n° 2290448).

La demanderesse a mis au point un procédé de fabrication de silane qui permet notamment d'obtenir celui-ci très aisément et avec une excellente sélectivité sans avoir recours à une série de distillations successives comme dans le procédé selon le brevet français n° 2261977. Le procédé selon la présente invention permet en outre d'obtenir le silane avec une excellente productivité.

La présente invention concerne en effet un procédé de fabrication de silane à partir de trichlorosilane caractérisé en ce que:

a) dans une première étape, on opère la dismutation du trichlorosilane en présence d'un composé comportant au moins un groupement α oxo-amine, selon cette première étape le trichlorosilane (1) est introduit dans le réacteur $R_1$ de dismutation constituant par ailleurs le pied de la colonne A; le composé comportant au moins un groupement α oxo-amine éventuellement en solution dans un diluant est également introduit dans ce réacteur $R_1$; le réacteur est maintenu à une pression égale ou supérieure à la pression atmosphérique et à une température telle que le mélange soit à l'ébullition;

b) dans une deuxième étape, on sépare par distillation du mélange réactionnel, le dichlorosilane formé lors de la première étape; selon cette deuxième étape on fait fonctionner la colonne A à reflux de façon à soutirer an tête de la colonne le dichlorosilane (2) formé;

c) dans une troisième étape, on opère la dismutation du dichlorosilane provenant de la deuxième étape en présence d'un composé comportant au moins un groupement α oxo-amine; selon cette troisième étape le dichlorosilane (2) est introduit dans le réacteur $R_2$ constituant par ailleurs le pied de la colonne B sous forme liquide ou gazeuse; le composé T comportant au moins un groupement α oxo-amine éventuellement en solution dans un diluant et qui a été choisi également comme composé réalisant la solvatation sélective des chlorosilanes est alimenté (3) en tête de la colonne B;

d) dans une quatrième étape, on opère la séparation du silane formé des autres produits gazeux par mise en contact du mélange gazeux provenant de la troisième étape avec un composé réalisant la solvatation sélective des chlorosilanes contenus dans le mélange gazeux; selon cette quatrième étape, on maintient dans la colonne B un gradient de température tel que les produits de la dismutation autres que $SiH_4$ restent dissouts dans la phase liquide, le silane (4) étant récupéré pur en tête de B. On recueille dans le réacteur $R_2$ de la colonne B du trichlorosilane, des chlorosilanes résiduels et le composé comportant au moins un groupement α oxo-amine éventuellement en solution dans un diluant, ce mélange peut être recyclé dans le réacteur $R_1$.

Si on le désire, on peut opérer la séparation par distillation dans la colonne C entre le trichlorosilane n'ayant pas réagi dans R 1 et le mélange: tétrachlorure de silicium formé plus composé T. Le trichlorosilane (5) ainsi séparé peut être recyclé dans le réacteur $R_1$ en pied de la colonne A. Puis, on peut facilement séparer le tétrachlorosilane $SiCl_4$ du composé T par distillation dans la colonne D et recycler ledit composé T (6) éventuellement en solution dans un diluant en tête de la colonne B.

La demanderesse a découvert de façon totalement surprenante que la combinaison des quatre étapes ci-dessus permettait non seulement d'obtenir du silane à partir du trichlorosilane avec une

excellente sélectivité et un excellent rendement, mais également une récupération du silane très aisée par solvatation séléctive des autres produits de réaction. Le composé réalisant la solvatation sélective des chlorosilanes contenus dans le mélange gazeux peut notamment être un composé comportant un groupement $\alpha$ oxo-amine. En effet, et sans limiter la présente invention à la théorie, il semble que les composés comportant au moins un groupement $\alpha$ oxo-amine peuvent jouer à la fois un rôle de catalyseur dans les deux étapes de dismutation du procédé de l'invention et, dans la quatrième étape, un rôle de solvant sélectif des produits de réaction qui permet la séparation du silane des autres produits de réaction.

Les composés comportant au moins un groupement $\alpha$ oxo-amine que l'on peut mettre en œuvre selon le procédé de l'invention répondent à la formule générale

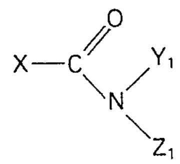

dans laquelle X est choisi parmi les radicaux hydrocarbonés ayant de 1 à 10 atomes de carbone et les radicaux:

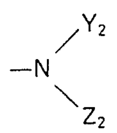

; OR ;

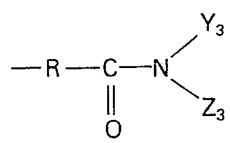

avec $Y_2$, $Z_2$, R, $Y_3$, $Z_3$ représentant des radicaux hydrocarbonés ayant de 1 à 10 atomes de carbone.

$Y_1$ et $Z_1$ sont choisis parmi les radicaux hydrocarbonés ayant de 1 à 10 atomes de carbone et les radicaux alkoxy ayant de 1 à 10 atomes de carbone.

$Y_1$, $Z_1$, $Y_2$ et $Z_2$ pouvant être liés,

X et $Y_1$ ou $Z_1$ pouvant étre liés quand X est un radical hydrocarboné,

$X_3$ et $Z_3$ pouvant être liés.

Parmi ces composés on pourra utiliser notamment les urées, les diurées, les carbamates, les N-alkoxyamides, les tétraalcoylurées et les pyrrolidones N-substituées.

Selon le procédé de l'invention, on préfère mettre en œuvre les tétraalcoylurées et les pyrrolidones N-substituées.

Les tétraalcoylurées qui conviennent plus particulièrement aux fins de l'invention répondent à la formule générale

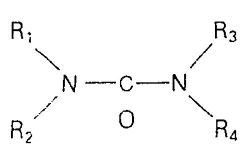

dans laquelle les radicaux $R_1$, $R_2$, $R_3$, $R_4$ identiques ou différents représentent des groupements alcoyle à chaîne droite ou ramifiée comportant de 1 à 6 atomes de carbone. Parmi celles-ci on peut citer la tétraméthylurée, la tétraéthylurée et la tétrabutylurée.

Les pyrrolidones N-substituées qui conviennent plus particulièrement aux fins de l'invention répondent à la formule générale:

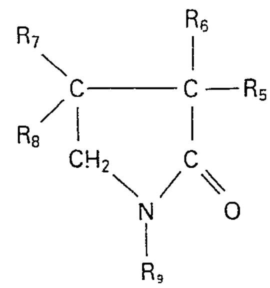

dans laquelle les radicaux $R_5$, $R_6$, $R_7$, $R_8$ identiques ou différents représentent l'hydrogène ou un radical méthyle, le radical $R_9$ représente un radical alcoyle ou alcenyle à chaîne droite ou ramifiée comportant de 1 à 6 atomes de carbone, ou un radical cyclohexyle ou phényle. Parmi celles-ci on peut citer la N-méthylpyrrolidone et la N-éthylpyrrolidone.

Selon la première étape du procédé de l'invention, on opère la dismutation du trichlorosilane en présence d'un composé comportant au moins un groupement $\alpha$ oxo-amine.

La quantité dudit composé mis en œuvre dans cette étape n'est pas critique. De préférence, le rapport molaire entre le composé comportant au moins un groupement $\alpha$ oxo-amine et le trichlorosilane est compris entre 2 et 1/100 et de préférence entre 1/2 et 1/50, le composé pouvant être ajouté en totalité au début de la réaction ou en plusieurs fois.

Cette première étape est de préférence réalisée par chauffage de l'ensemble des réactifs à la température d'ébullition du mélange sous une pression inférieure, égale ou supérieure à la pression atmosphérique. On opère de préférence à la pression atmosphérique ou à une pression supérieure. La température d'ébullition du mélange est généralement comprise entre 15°C et 120°C.

Par ailleurs, cette première étape peut être réalisée en présence d'un diluant des réactifs tel qu'un hydrocarbure aliphatique ou aromatique. On peut ainsi utiliser comme diluant par exemple du cyclohexane, du benzène, du toluène, de l'orthodichlorobenzène ou de tétrachloro 1,1,2,2 éthane.

Cette première étape peut être mise en œuvre en continu ou en discontinu.

Selon la deuxième étape du procédé de l'invention, on sépare par distillation du mélange réactionnel, le dichlorosilane formé lors de la première étape. On opère de préférence en continu avec séparation par distillation du dichlorosilane au fur et à mesure de sa formation. La distillation est opérée sous une pression inférieure, égale ou supérieure à la pression, atmosphérique et de

préférence à une pression identique à celle mise en œuvre lors de la première étape.

Le dichlorosilane ainsi séparé peut contenir de petites quantités de trichlorosilane sans que cela nuise à la mise en œuvre des étapes ultérieures.

Selon la troisième étape du procédé de l'invention, on opère la dismutation du dichlorosilane provenant de la deuxième étape en présence d'un composé comportant au moins un groupement α oxo-amine. Le composé mis en œuvre dans cette troisième étape est de préférence identique à celui mis en œuvre au cours de la première étape. La dismutation du dichlorosilane conduit à la formation de silane, de trichlorosilane et de chlorosilanes résiduels.

La quantité de composé mis en œuvre dans cette étape n'est pas critique. De préférence, le rapport molaire entre le composé comportant au moins un groupement α oxo-amine et le dichlorosilane est compris entre 1/100 et 1/50 et de préférence entre 1/2 et 1/50.

La dismutation du dichlorosilane est de préférence réalisée à une température comprise entre −20°C et 100°C et plus particulièrement entre 10 et 80°C sous une pression inférieure, égale ou supérieure à la pression atmosphérique. On opère de préférence à la pression atmosphérique.

Par ailleurs, comme pour la première étape, la troisième étape peut être réalisée en présence d'un diluant des réactifs tel qu'un hydrocarbure aliphatique ou aromatique. On peut ainsi utiliser comme diluant, par exemple, du cyclohexane, du toluène, du benzène, de l'orthodichlorobenzène ou du tétrachloro 1,1,2,2 éthane.

Selon la quatrième étape du procédé de l'invention, on opère la séparation du silane formé des autres produits gazeux par mise en contact du mélange gazeux provenant de la troisième étape avec un composé réalisant la solvatation sélective des chlorosilanes contenus dans le mélange gazeux.

Le composé mis en œuvre dans cette étape est notamment choisi parmi les hydrocarbures aliphatiques ou aromatiques éventuellement halogénés, les éther-oxydes, les cétones et les composés comportant au moins un groupement α oxo-amine ou des mélanges de ces produits.

Les composés comportant au moins un groupement α oxo-amine que l'on peut mettre en œuvre dans cette étape pour réaliser la séparation du silane d'avec les autres produits gazeux sont ceux qui ont été décrits ci-dessus. Selon l'invention, lorsque dans cette quatrième étape on utilise un tel composé, celui-ci est de préférence choisi identique pour les première, troisième et quatrième étape.

Par ailleurs, si l'on opère la quatrième étape en présence d'un composé comportant au moins un groupement α oxo-amine, la troisième étape peut se poursuivre au cours de cette quatrième étape.

Parmi les composés opèrant la séparation du silane formé des autres produits gazeux provenant de la troisième étape, on utilise de préférence au moins un composé choisi parmi: le cyclohexane, le benzène, le toluène, l'orthodichlorobenzène, le tétrachloro 1,1,2,2 éthane, la tétraméthylurée, la tétraéthylurée, la tétrabutylurée, la N-méthylpyrrolidone, la N-éthylpyrrolidone ou un mélange de ces produits.

La présente invention va maintenant être illustrée par les exemples ci-après qui font également référence à la fig. 1.

Exemple 1

Le réacteur $R_1$ utilisé est constitué d'un ballon de 1 litre surmonté d'une colonne à distiller A de 2 m de long et de 30 mm de diamètre, remplie de serpentins en verre de 4 mm de diamètre. Cette colonne est elle-même surmontée d'un rétrogradateur permettant de faire varier le taux de reflux. Le rétrogradateur et le condenseur qui le suit sont refroidis à l'aide d'un groupe frigorifique. Le récepteur est refroidi par de la carboglace.

L'ensemble de l'appareillage est sous atmosphère d'azote.

792 g de trichlorosilane (1) sont chargés dans le réacteur et portés à l'ébullition, à reflux total. Le mélange catalytique constitué de 79 g de N-méthylpyrrolidone et 156 g de cyclohexane sont ensuite chargés rapidement dans $R_1$.

Le prélèvement du dichlorosilane (2) formé débute lorsque la température en tête de colonne atteint 11°C. Il est arrêté lorsque cette température dépasse 20°C. La masse de la fraction ainsi obtenue en 6 h est de 158 g et sa composition est la suivante (analyse par chromatographie en phase gazeuse):

$H_3SiCl$: 1,5%
$H_2SiCl_2$: 89%
$HSiCl_3$: 9,5%
} Pourcentages volumiques

La poursuite de la distillation permet de séparer $HSiCl_3$ qui n'a pas réagit et qui peut être recyclé.

On obtient ainsi, en tenant compte de l'ensemble des fractions prélevées, un taux de transformation de $HSiCl_3$ de 71,2% et un rendement en $H_2SiCl_2$ par rapport à $HSiCl_3$ transformé de 72,8%.

Plusieurs dismutations successives permettent d'obtenir suffisamment de dichlorosilane pour passer aux autres étapes.

Le réacteur $R_2$ utilisé pour la troisième étape est constitué d'un ballon de 1 litre surmonté d'un colonne B à plateaux de 800 mm de long et de 30 mm de diamètre.

Le dichlorosilane (2) est introduit par barbottage dans le ballon préalablement rempli de 500 ml de mélange tétraméthylurée-orthodichlorobenzène (rapport 50/50 volumique). Le mélange T tétraméthylurée – $C_6H_4Cl_2$ est introduit en tête de colonne T (3), il circule à contre-courant avec la phase gazeuse provenant du ballon.

Le débit de $H_2SiCl_2$ est de 69,1 g/h et celui du mélange T 66,7 g/h.

La température du ballon est maintenue à 26°C. Celle de la colonne est de 26°C en pied et de −12°C en tête.

La volume de la masse réactionnelle dans le ballon est maintenu à 500 ml par prélèvement continu, à niveau constant.

La phase liquide prélevée et la phase gazeuse sortant du réacteur sont analysés par chromatographie en phase gazeuse. Le débit de la phase gazeuse est mesuré.

A l'équilibre, la composition de la phase liquide sortant du réacteur est la suivante:

| | |
|---|---|
| $H_2SiCl_2$: 20% | Pourcentages massiques |
| $HSiCl_3$: 35% | |
| $SiCl_4$: 1% | |
| (Tétraméthylurée $C_6H_4Cl_2$): 44% | |

Celle de la phase gazeuse sortant en tête de la colonne B est la suivante:

| | |
|---|---|
| $H_2$: 2,1% | Pourcentages volumiques |
| $SiH_4$: 97,9% | |

Son débit est de 2,40 l/h.

Ces compositions correspondent à un taux de transformation de $H_2SiCl_2$ de 48,2% et à un rendement en silane par rapport à $H_2SiCl_2$ de 85,6%.

Exemple 2

L'appareil est constitué d'un réacteur $R_1$ émaillé de 12 litres surmonté d'une colonne à distiller de 2 m de haut, de 50 mm de diamètre, avec un garnissage Knit en P.T.F.E. Une tête de colonne à commande électromagnétique permet de régler le taux de reflux. Différents récipients de stockage et des vannes électromagnétiques permettent d'introduire dans le réacteur des quantités connues de trichlorosilane et de catalyseur. Le dichlorosilane produit est stocké dans des récepteurs en acier inoxydable après condensation dans un réfrigérant refroidi au Flugène 113®.

L'ensemble de l'appareillage est sous atmosphère d'azote.

7500 g de $HSiCl_3$ (1) sont chargés dans le réacteur et portés à l'ébullition à reflux total. 1476 g de tétraméthylurée sont ensuite introduits dans le réacteur $R_1$.

Le dichlorosilane (2) est prélevé au fur et à mesure de sa production. Le taux de reflux est réglé de façon à ce que la température en tête de colonne ne dépasse pas 11°C, ce taux est environ de 40/l. En fin d'essai, cette température est portée à 21°C afin de distiller le maximum de $H_2SiCl_2$.

On obtient en 4 h 55, un condensat de 1500 g dont la composition est la suivante:

| | |
|---|---|
| $H_3SiCl$: 7% | Pourcentages volumiques |
| $H_2SiCl_2$: 88,6% | |
| $HSiCl_3$: 4,4% | |

La poursuite de la distillation permet d'éliminer le trichlorosilane qui n'a pas réagit et qui peut être recyclé, puis le tétrachlorure de silicium formé. La phase liquide restant dans le réacteur ne contient pratiquement que de la tétraméthylurée et peut être réutilisée telle quelle.

Le taux de transformation de $HSiCl_3$ obtenu est de 64,0% et le rendement en $H_2SiCl_2$ par rapport à $HSiCl_3$ transformé, de 77,7%.

Dans un réacteur $R_2$ identique à celui décrit dans le premier exemple, sont introduits le dichlorosilane et le mélange catalytique T constitué de tétraméthylurée et d'orthodichlorobenzène dans le rapport 25/75 volumique. Le mélange catalytique T est introduit en tête de la colonne T (3), il circule à contre-courant avec la phase gazeuse provenant du ballon.

Le débit de $H_2SiCl_2$ est de 64 g/h et celui du mélange catalytique 80 g/h.

La température du ballon est fixée à 35°C, celle de la colonne B est de 30°C en pied et de −10°C en tête.

A l'équilibre, la composition de la phase liquide prélevée est la suivante:

| | |
|---|---|
| $H_2SiCl_2$: 14% | Pourcentages massiques |
| $HSiCl_3$: 34% | |
| $SiCl_4$: 1% | |
| (Tétraméthylurée-$C_6H_4Cl_2$): 51% | |

Celle de la phase gazeuse sortant de la colonne de lavage est la suivante:

| | |
|---|---|
| $H_2$: 1,5% | Pourcentages volumiques |
| $SiH_4$: 98,5% | |

Son débit est de 3,41 l/h.

Ces compositions correspondent à un taux de transformation de $H_2SiCl_2$ de 70,7% et le rendement en silane, par rapport à $H_2SiCl_2$ transformé, est de 93,1%.

**Revendications**

1. Procédé de fabrication de silane à partir de trichlorosilane caractérisé en ce que:

a) dans une première étape, on opère la dismutation du trichlorosilane en présence d'un composé comportant au moins un groupement α oxo-amine, selon cette première étape le trichlorosilane (1) est introduit dans le réacteur $R_1$ de dismutation constituant par ailleurs le pied de la colonne A; le composé comportant au moins un groupement α oxo-amine éventuellement en solution dans un diluant est également introduit dans ce réacteur $R_1$; le réacteur est maintenu à une pression égale ou supérieure à la pression atmosphérique et à une température telle que le mélange soit à l'ébullition;

b) dans une deuxième étape, on sépare par distillation du mélange réactionnel, le dichlorosilane formé lors de la première étape; selon cette deuxième étape on fait fonctionner la colonne A à reflux de façon à soutirer en tête de la colonne de dichlorosilane (2) formé;

c) dans une troisième étape, on opère la dismutation du dichlorosilane provenant de la deuxième étape en présence d'un composé comportant au moins un groupement α oxo-amine; selon cette troisième étape le dichlorosilane (2) est introduit dans le réacteur $R_2$ constituant par ailleurs le pied de la colonne B sous forme liquide ou gazeuse; le composé T comportant au moins un groupement

α oxo-amine éventuellement en solution dans un diluant et qui a été choisi également comme composé réalisant la solvatation sélective des chlorosilanes est alimenté (3) en tête de la colonne B;

d) dans une quatrième étape, on opère la séparation du silane formé des autres produits gazeux par mise en contact du mélange gazeux provenant de la troisième étape avec un composé réalisant la solvatation sélective des chlorosilanes contenus dans le mélange gazeux; selon cette quatrième étape, on maintient dans la colonne B un gradient de température tel que les produits de la dismutation autres que $SiH_4$ restent dissouts dans la phase liquide, le silane (4) étant récupéré pur en tête de B. On recueille dans le réacteur $R_2$ de la colonne B du trichlorosilane, des chlorosilanes résiduels et le composé comportant au moins un groupement α oxo-amine éventuellement en solution dans un diluant, ce mélange peut être recyclé dans le réacteur $R_1$.

2. Procédé selon la revendication 1, caractérisé en ce que le composé mis en œuvre dans la quatrième étape est choisi parmi: les hydrocarbures aliphatiques ou aromatiques éventuellement halogénés, les éther-oxydes, les cétones et les composés comportant au moins un groupement α oxo-amine.

3. Procédé selon l'une quelconque des revendications 1 ou 2, caractérisé en ce que les composés comportant au moins un groupement α oxoamine répondent à la formule générale.

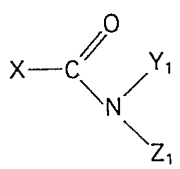

dans laquelle X est choisi parmi les radicaux hydrocarbonés ayant de 1 à 10 atomes de carbone et les radicaux:

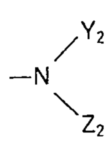 ; —OR ; 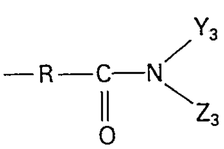

avec $Y_2$, $Z_2$, R, $Y_3$, $Z_3$ représentant des radicaux hydrocarbonés ayant de 1 à 10 atomes de carbone.

$Y_1$ et $Z_1$ sont choisis parmi les radicaux hydrocarbonés ayant de 1 à 10 atomes de carbone et les radicaux alkoxy ayant de 1 à 10 atomes de carbone.

$Y_1$, $Z_1$, $Y_2$ et $Z_2$ pouvant être liés,

X et $Y_1$ ou $Z_1$ pouvant être liés quand X est un radical hydrocarboné,

$X_3$ et $Z_3$ pouvant être liés.

4. Procédé selon la revendication 3, caractérisé en ce que les composés comportant au moins un groupement α oxo-amine sont choisis parmi: les urées, les diurées, les carbamates, les N-alkoxyamides, les tétraalcoylurées, les pyrrolidones N-substituées.

5. Procédé selon la revendication 4, caractérisé en ce que les composés comportant au moins un groupement α oxo-amine sont choisis parmi: la tétraméthylurée, la tétraéthylurée, la tétrabutylurée, la N-méthylpyrrolidone, la N-éthylpyrrolidone.

6. Procédé selon la revendication 1, caractérisé en ce que la première et la troisième étape sont réalisées en présence d'un diluant des réactifs choisi parmi le cyclohexane, le toluène, le benzène, l'orthodichlorobenzène et le tétrachloro 1,1,2,2 éthane.

7. Procédé selon la revendication 1, caractérisé en ce que, dans la première et la troisième étape, le rapport molaire entre le composé comportant au moins un groupement α oxo-amine et le trichlorosilane ou le dichlorosilane est compris entre 2 et 1/100 et de préférence entre 1/2 et 1/50.

8. Procédé selon la revendication 1, caractérisé en ce que la première étape est réalisée par chauffage de l'ensemble des réactifs à la température d'ébullition du mélange.

9. Procédé selon la revendication 1, caractérisé en ce que la troisième étape est réalisée à une température comprise entre −20°C et 100°C et de préférence entre 10 et 80°C.

**Claims**

1. Process the manufacture of silane from trichlorosilane, characterized in that:

a) in a first step, the disproportionation of trichlorosilane is carried out in the presence of a compound containing at least one α oxo-amine group; according to this first step trichlorosilane (1) is introduced into the disproportionation reactor $R_1$ which, furthermore, constitutes the bottom of the column A; the compound containing at least one α oxo-amine group, optionally dissolved in a diluent, is also introduced into this reactor $R_1$; the reactor is maintained at a pressure equal to or above atmospheric pressure and at a temperature such that the mixture boils;

b) in a second step, the dichlorosilane formed during the first step is separated from the reaction mixture by distillation; according to this second step the column A is operated under reflux so that the dichlorosilane (2) formed is taken off at the top of the column;

c) in a third step, the disproportionation of the dichlorosilane originating from the second step is carried out in the presence of a compound containing at least one α oxo-amine group; according to this third step the dichlorosilane (2) is introduced into the reactor $R_2$ constituting, furthermore, the bottom of the column B, in liquid or gaseous form; the compound T containing at least one α oxo-amine group, optionally dissolved in a diluent and which has been chosen also as a compound effecting the selective solvation of the chlorosilanes is fed in (3) at the top of column B;

d) in a fourth step, separation of the silane formed from the other gaseous products is carried out by bringing the gaseous mixture originating from the third step into contact with a compound

which effects the selective solvation of the chlorosilanes present in the gaseous mixture; according to this fourth step, a temperature gradient is maintained in column B such that the disproportionation products other than $SiH_4$ remain dissolved in the liquid phase, silane (4) being recovered pure at the top of B. Trichlorosilane, residual chlorosilanes, and the compound containing at least one α oxo-amine group, optionally dissolved in a diluent, are collected in the reactor $R_2$ of the column B; this mixture may be recycled to the reactor $R_1$.

2. Process according to claim 1, characterized in that the compound used in the fourth stage is chosen from: optionally halogenated aliphatic or aromatic hydrocarbons, ethers, ketones and compounds containing at least one α oxo-amine group.

3. Process according to either of claims 1 or 2, characterized in that the compounds containing at least one α oxo-amine group correspond to the general formula

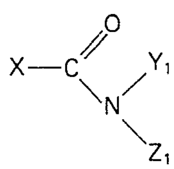

in which X is chosen from hydrocarbon radicals containing from 1 to 10 carbon atoms and the radicals:

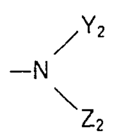 , — OR ; 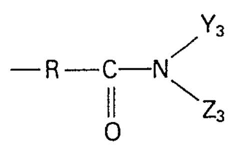

where $Y_2$, $Z_2$, R, $Y_3$ and $Z_3$ denote hydrocarbon radicals containing from 1 to 10 carbon atoms,

$Y_1$ and $Z_1$ are chosen from hydrocarbon radicals containing from 1 to 10 carbon atoms and alkoxy radicals containing from 1 to 10 carbon atoms,

$Y_1$, $Z_1$, $Y_2$ and $Z_2$ being capable of being linked,

X and $Y_1$ or $Z_1$ being capable of being linked when X is a hydrocarbon radical, and

$X_3$ and $Z_3$ being capable of being linked.

4. Process according to claim 3, characterized in that the compounds containing at least one α oxo-amine group are chosen from: ureas, diureas, carbamates, N-alkoxyamides, tetraalkylureas and N-substituted pyrrolidones.

5. Process according to claim 4, characterized in that the compounds containing at least one α oxo-amine group are chosen from: tetramethylurea, tetraethylurea, tetrabutylurea, N-methylpyrrolidone and N-ethylpyrrolidone.

6. Process according to claim 1, characterized in that the first and the third step are carried out in the presence of a diluent for the reactants which is chosen from cyclohexane, toluene, benzene, ortho-dichlorobenzene and 1,1,2,2-tetrachloroethane.

7. Process according to claim 1, characterized in that, in the first and the third step, the molar ratio of the compound containing at least one α oxo-amine group to trichlorosilane or dichlorosilane is between 2 and 1/100 and preferably between 1/2 and 1/50.

8. Process according to claim 1, characterized in that the first step is carried out by heating all the reactants at the boiling temperature of the mixture.

9. Process according to claim 1, characterized in that the third step is carried out at a temperature between −20°C and 100°C and preferably between 10 and 80°C.

**Patentansprüche**

1. Verfahren zur Herstellung von Silan aus Trichlorsilan, dadurch gekennzeichnet, dass man:

a) in einer ersten Stufe Trichlorsilan in Gegenwart einer Verbindung, die wenigstens eine α-Oxo-Amingruppe trägt, dismutiert; in dieser ersten Stufe setzt man das Trichlorsilan (1) und die Verbindung, die wenigstens eine α-Oxo-Amingruppe trägt und gegebenenfalls in Lösung in einem Lösungsmittel vorliegt, in den Dismutationsreaktor $R_1$, der ausserdem der Sumpf der Kolonne A ist, ein und hält den Reaktor auf einem Druck gleich oder oberhalb dem Atmosphärendruck und auf einer Temperatur, bei der das Gemisch am Sieden bleibt;

b) in einer zweiten Stufe durch Destillation das bei der ersten Stufe gebildete Dichlorsilan aus dem Reaktionsgemisch abtrennt, wobei man in dieser zweiten Stufe die Kolonne A in der Weise unter Rückfluss betreibt, dass man am Kopf der Kolonne das gebildete Dichlorsilan (2) abzieht;

c) in einer dritten Stufe die Dismutation des Dichlorsilans aus der zweiten Stufe in Gegenwart einer Verbindung durchführt, die wenigstens eine α-Oxo-Amingruppe enthält, wobei man in dieser dritten Stufe das Dichlorsilan (2) in den Reaktor $R_2$, der ausserdem der Sumpf der Kolonne B ist, in flüssiger oder gasförmiger Form einsetzt, und wobei die Verbindung T, die mindestens eine α-Oxo-Amingruppe trägt und gegebenenfalls in Lösung in einem Lösungsmittel vorliegt und die gleichfalls als Verbindung, die die selektive Solvatation der Chlorsilane bewirkt, ausgewählt wird, am Kopf der Kolonne B eingespeist wird (3);

d) in einer vierten Stufe die Trennung des gebildeten Silans von den anderen gasförmigen Produkten durchführt, indem man das Gasgemisch aus der dritten Stufe mit einer Verbindung in Kontakt bringt, die die selektive Solvatation der in dem Gasgemisch enthaltenen Chlorsilane bewirkt, wobei man bei dieser vierten Stufe in der Kolonne B einen derartigen Temperaturgradienten aufrecht erhält, dass die anderen Dismutationsprodukte als das $SiH_4$ in der flüssigen Phase gelöst bleiben und das Silan (4) am Kopf von B in reiner Form erhalten wird; in dem Reaktor $R_2$, der Kolonne B sammelt, erhält man Trichlorsilan, restliche Chlorsilane und die Verbindung, die wenigstens eine α-Oxo-Amingruppe trägt und gegebenenfalls in einem Lösungsmittel gelöst vorliegt, wobei diese Mischung in den Reaktor $R_1$ zurückgeführt werden kann.

2. Verfahren nach Anspruch 1, dadurch gekennzeichnet, dass die in der vierten Stufe eingesetzte Verbindung ausgewählt wird unter den gegebenenfalls halogenierten aliphatischen oder aromatischen Kohlenwasserstoffen, den Ether-Oxiden, den Ketonen und den Verbindungen, die mindestens eine α-Oxo-Amingruppe tragen.

3. Verfahren nach Anspruch 1 oder 2, dadurch gekennzeichnet, dass die Verbindungen, die wenigstens eine α-Oxo-Amingruppe tragen, die allgemeine Formel besitzen

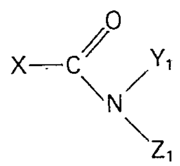

in der X unter den Kohlenwasserstoffradikalen mit 1 bis 10 Kohlenstoffatomen und den Radikalen:

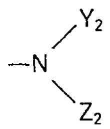 ; —OR ; 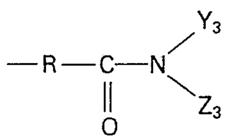

ausgewählt wird, wobei $Y_2$, $Z_2$, R, $Y_3$ und $Z_3$ Kohlenwasserstoffradikale mit 1 bis 10 Kohlenstoffatomen sind,

$Y_1$ und $Z_1$ unter den Kohlenwasserstoffradikalen mit 1 bis 10 Kohlenstoffatomen und den Alkoxyradikalen mit 1 bis 10 Kohlenstoffatomen ausgewählt sind,

$Y_1$, $Z_1$, $Y_2$ und $Z_2$ miteinander verbunden sein können,

X und $Y_1$ oder $Z_1$ miteinander verbunden sein können, wenn X ein Kohlenwasserstoffradikal ist, und $X_3$ und $Z_3$ miteinander verbunden sein können.

4. Verfahren nach Anspruch 3, dadurch gekennzeichnet, dass die Verbindungen, die mindestens eine α-Oxo-Amingruppe tragen, ausgewählt sind unter den Harnstoffen, den Diharnstoffen, den Carbamaten, den N-Alkoxyamiden, den Tetraalkoylharnstoffen, den N-substituierten Pyrrolidonen.

5. Verfahren nach Anspruch 4, dadurch gekennzeichnet, dass die Verbindungen, die mindestens eine α-Oxo-Amingruppe tragen, ausgewählt sind unter Tetramethylharnstoff, Tetraethylharnstoff, Tetrabutylharnstoff, N-Methylpyrrolidon und N-Ethylpyrrolidon.

6. Verfahren nach Anspruch 1, dadurch gekennzeichnet, dass die erste und die dritte Stufe in Gegenwart eines Lösungsmittels für die Reaktionspartner durchgeführt werden, das ausgewählt wird unter Cyclohexan, Toluol, Benzol, Orthodichlorbenzol und 1,1,2,2-Tetrachlorethan.

7. Verfahren nach Anspruch 1, dadurch gekennzeichnet, dass in der ersten und in der dritten Stufe das Molverhältnis zwischen der Verbindung, die mindestens eine α-Oxo-Amingruppe trägt, und dem Trichlorsilan oder dem Dichlorsilan zwischen 2 und 1/100, vorzugsweise zwischen 1/2 und 1/50 liegt.

8. Verfahren nach Anspruch 1, dadurch gekennzeichnet, dass die erste Stufe durch Erwärmen der Gesamtheit der Reaktionspartner auf die Siedetemperatur des Gemischs durchgeführt wird.

9. Verfahren nach Anspruch 1, dadurch gekennzeichnet, dass die dritte Stufe bei einer Temperatur zwischen −20°C und 100°C, vorzugsweise zwischen 10 und 80°C, durchgeführt wird.

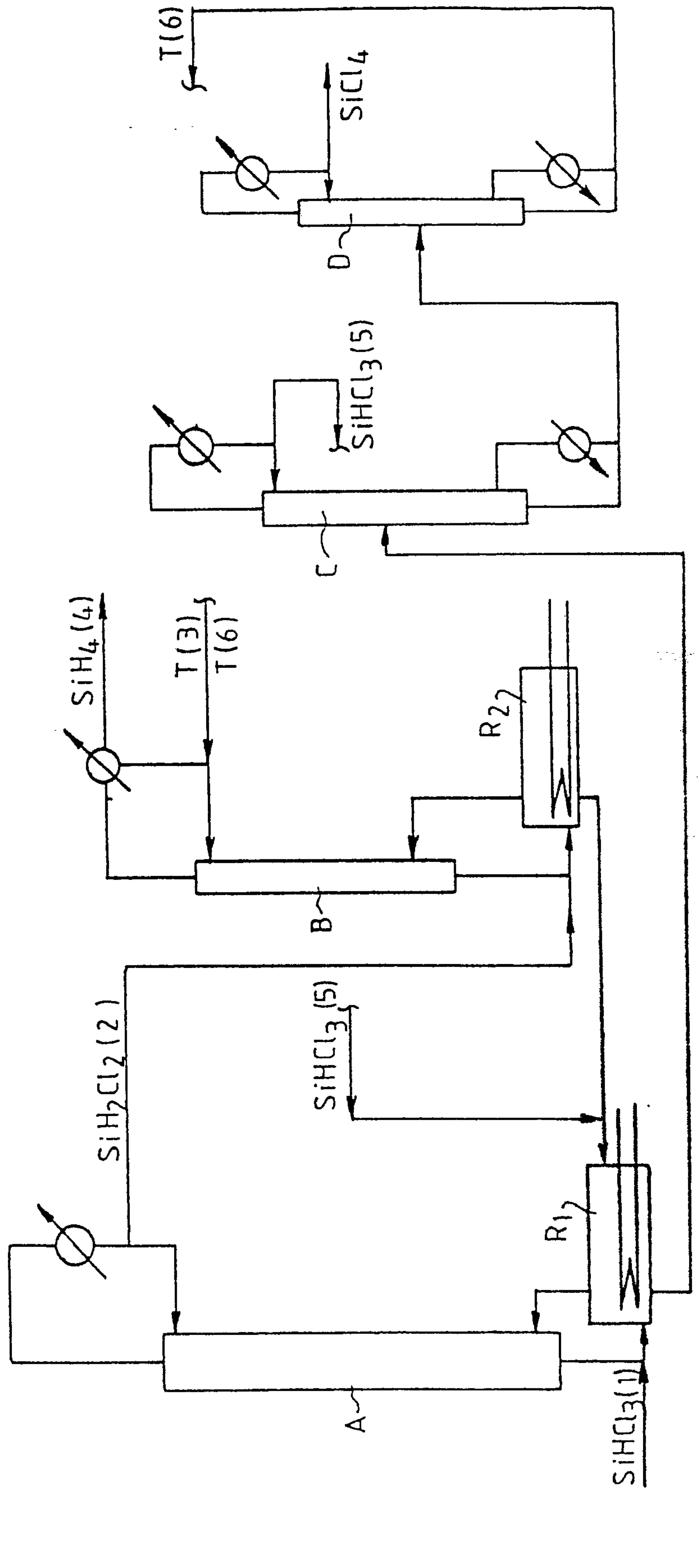
T(6)
SiCl4
D
SiHCl3(5)
C
SiH4(4)
T(3)
T(6)
R2
B
SiH2Cl2(2)
SiHCl3(5)
R1
A
SiHCl3(1)